**Europäisches Patentamt**

**European Patent Office**

**Office européen des brevets**

(19)

(11) Veröffentlichungsnummer: **0 261 435 B1**

(12) **EUROPÄISCHE PATENTSCHRIFT**

(45) Veröffentlichungstag der Patentschrift: **09.10.91**

(51) Int. Cl.5: **G01F 1/84**, G01F 15/02

(21) Anmeldenummer: **87112469.9**

(22) Anmeldetag: **27.08.87**

(54) **Nach dem Coriolisprinzip arbeitendes Massendurchflussmessgerät.**

(30) Priorität: **26.09.86 DE 3632800**

(43) Veröffentlichungstag der Anmeldung:
**30.03.88 Patentblatt 88/13**

(45) Bekanntmachung des Hinweises auf die
Patenterteilung:
**09.10.91 Patentblatt 91/41**

(84) Benannte Vertragsstaaten:
**CH DE FR GB IT LI NL**

(56) Entgegenhaltungen:
**EP-A- 0 069 170**
**GB-A- 2 171 200**
**JP-A- 6 196 413**

**PATENT ABSTRACTS OF JAPAN, Band 10,
Nr. 274 (P-498)[2330], 18. September 1986; &
JP-A-61 96 413**

**MESSEN PRÜFEN AUTOMATISIEREN, Band
23, Nr. 5, Mai 1987, Seiten 301-305, Bad Wörishofen, DE; W. STEFFEN et al.: "Direkte
Massedurchflussmessung, insbesondere
mit coriolisverfahren"**

(73) Patentinhaber: **FLOWTEC AG
Kägenstrasse 7
CH-4153 Reinach BL 1(CH)**

(72) Erfinder: **Flecken, Peter
Kirchstrasse 8
W-7858 Weil-Haltingen(DE)**
Erfinder: **Abildgaard, Niels
Fischersgade 42
DK-9630 Logstor(DK)**

(74) Vertreter: **Leiser, Gottfried, Dipl.-Ing. et al
Patentanwälte Prinz, Leiser, Bunke & Partner
Manzingerweg 7
W-8000 München 60(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein nach dem Coriolisprinzip arbeitendes Massendurchflußmeßgerät mit einem Trägerrohr, einem axial im Trägerrohr angeordneten mechanischen Schwingsystem mit wenigstens einem an beiden Enden eingespannten geraden Meßrohr, einem Schwingungserreger, der das bzw. jedes Meßrohr in der Mitte in Biegeschwingungen versetzt, Schwingungssensoren, welche die mechanischen Schwingungen in gleichen Abständen zu beiden Seiten des Schwingungserregers abtasten und elektrische Schwingungssensorsignale erzeugen, die für die Frequenz und Phasenlage der abgetasteten Schwingungen kennzeichnend sind, und mit einer Auswerteschaltung, welche die Schwingungssensorsignale empfängt und aus deren Phasendifferenz ein den Meßwert des Massendurchflusses anzeigendes Meßsignal erzeugt.

Bei den nach dem Coriolisprinzip arbeitenden Massendurchflußmeßgeräten dieser Art beruht die Massendurchflußmessung bekanntlich darauf, daß das durch die schwingenden geraden Meßrohre strömende Meßmedium Corioliskräfte erzeugt, die eine gegenseitige Phasenverschiebung der mechanischen Schwingungen an den beiden Enden jedes Meßrohres zur Folge haben. Die Größe dieser Phasenverschiebung ist ein Maß für den Massendurchfluß. Die Phasenverschiebung wird mit Hilfe der beiden Schwingungssensoren gemessen, die die von ihnen abgetasteten Schwingungen in elektrische Schwingungssensorsignale umsetzen, die für die Phasenlage der Schwingungen kennzeichnend sind. Ausgehend von der Phasendifferenz zwischen den Schwingungssensorsignalen kann die Auswerteschaltung ein Meßsignal erzeugen, das den Meßwert des Massendurchflusses anzeigt.

Bei solchen Massendurchflußmeßgeräten kann der vom Meßsignal angezeigte Durchflußwert mit temperaturbedingten Fehlern behaftet sein. Ursachen für solche temperaturbedingte Fehler sind insbesondere ein Temperaturgefälle zwischen Trägerrohr und Schwingsystem, dynamische Temperaturwechsel sowie unterschiedliche Wärmeausdehnungskoeffizienten der Materialien, aus denen das Trägerrohr und das Schwingsystem bestehen.

Bei einem aus der GB-A-2 171 200 bekannten Massendurchflußmeßgerät der eingangs angegebenen Art werden Meßfehler, die durch axiale Spannungen in den Meßrohren verursacht werden, dadurch kompensiert, daß der Schwingungserreger eine der Grundschwingung überlagerte Oberschwingung erzeugt, daß die Werte der Resonanzfrequenzen der Grundschwingung und der Oberschwingung ermittelt werden und daß aus dem Verhältnis dieser Resonanzfrequenzen ein die axialen Spannungen in den Meßrohren berücksichtigender Korrekturwert abgeleitet wird. Auf diese Weise werden auch temperaturbedingte Meßfehler kompensiert, soweit die axialen Spannungen in den Meßrohren durch Temperaturänderungen verursacht werden. Die Ermittlung und Auswertung der Resonanzfrequenzen von Grund- und Oberschwingungen erfordert einen beträchtlichen Schaltungsaufwand. Eine Temperaturmessung findet bei diesem bekannten Massendurchflußmeßgerät nicht statt; Temperatureinflüsse, die sich nicht in axialen Spannungen in den Meßrohren äußern, können daher nicht kompensiert werden.

Andererseits ist es bei Durchflußmessern allgemein bekannt, einen Temperatursensor so anzubringen, daß er ein der Temperatur des Meßmediums entsprechendes elektrisches Signal liefert, das zur Korrektur des Meßwertsignals verwendet wird. Dadurch kann insbesondere der Einfluß der temperaturabhängigen Volumenänderungen des Meßmediums auf das Meßergebnis kompensiert werden. Diese Maßnahme ist beispielsweise in der EP-A-0 069 170 für den Fall eines Flügelrad-Durchflußmessers beschrieben. In der JP-A-61-96413 sind zusätzliche Maßnahmen beschrieben, durch die bei Verwendung eines solchen Temperatursensors, der die Temperatur des Meßmediums erfaßt, auch der Einfluß der temperaturabhängigen Ausdehnung des Gehäuses des Durchflußmessers auf das Meßergebnis kompensiert werden kann. Zu diesem Zweck wird mit einer Temperatureinstellvorrichtung die Temperatur des Gehäuses bei der Eichung des Gerätes als Referenztemperatur eingestellt, und mit einer weiteren Einstellvorrichtung wird der lineare Ausdehnungskoeffizient des Materials des Gehäuses eingestellt. Mit diesen eingestellten Werten kann dann bei der Korrektur des Meßwerts auch die temperaturabhängige Ausdehnung des Gehäuses berücksichtigt werden, wenn vorausgesetzt wird, daß die Temperatur des Gehäuses gleich der gemessenen Temperatur des Meßmediums ist.

Diese bekannten Maßnahmen ergeben jedoch keine Lösung des zuvor geschilderten Problems, das speziell bei den nach dem Coriolisprinzip arbeitenden Massendurchflußmessern der eingangs angegebenen Art auftritt, wenn ein Temperaturgefälle zwischen dem Trägerrohr und dem im Trägerrohr angeordneten Schwingsystem besteht. Bei solchen Massendurchflußmessern kann zwar angenommen werden, daß die Meßrohre des Schwingsystems stets die gleiche Temperatur wie das Meßmedium haben, doch ist die Temperatur des Trägerrohres gewöhnlich von der Temperatur des Meßmediums verschieden.

Aufgabe der Erfindung ist die Schaffung eines Massendurchflußmeßgeräts der eingangs angegebenen Art, bei welchem temperaturbedingte Fehler im Meßsignal weitgehend kompensiert sind.

Nach der Erfindung wird diese Aufgabe dadurch gelöst, daß ein erster Temperatursensor so angeordnet ist, daß er die Temperatur des Trägerrohres mißt und ein diese Temperatur anzeigendes erstes Temperatursensorsignal erzeugt, daß ein Zweiter Temperatursensor so angeordnet ist, daß er die Temperatur des mechanischen Schwingsystems mißt und ein diese Temperatur anzeigendes zweites Temperatursensorsignal erzeugt, und daß eine Korrekturschaltung die beiden Temperatursensorsignale empfängt und dem Meßsignal aufgrund dieser Temperatursensorsignale eine Korrektur zur Beseitigung des Temperatureinflusses auf das Meßergebnis erteilt.

Durch die getrennte Erfassung von zwei Temperaturen, nämlich der Temperatur des Trägerrohrs und der Temperatur des Schwingsystems, ist bei einem Massendurchflußmeßgerät mit an den Enden in einem Trägerrohr eingespannten geraden Meßrohren auf einfache Weise eine Korrektur des Meßsignals möglich, durch die temperaturbedingte Fehler sehr weitgehend kompensiert werden. Das nach der Erfindung ausgebildete Massendurchflußmeßgerät ermöglicht daher eine genaue Messung des Massendurchflusses in einem weiten Bereich der Umgebungstemperatur sowie von Meßmedien sehr unterschiedlicher, auch schwankender Temperaturen.

Vorteilhafte Ausgestaltungen und Weiterbildungen der Erfindung sind in den Unteransprüchen gekennzeichnet.

Weitere Merkmale und Vorteile der Erfindung ergeben sich aus der Beschreibung eines Ausführungsbeispiels, das in der Zeichnung dargestellt ist. In der Zeichnung zeigt:

Fig. 1   eine zum Teil geschnittene Seitenansicht eines nach dem Coriolisprinzip arbeitenden Massendurchflußmeßgeräts nach der Erfindung,

Fig. 2   eine Querschnittsansicht des Massendurchflußmeßgeräts von Fig. 1 entlang der Schnittlinie A-B und

Fig. 3   eine schematische Darstellung des Massendurchflußmeßgeräts mit dem Blockschaltbild der angeschlossenen elektronischen Schaltungen.

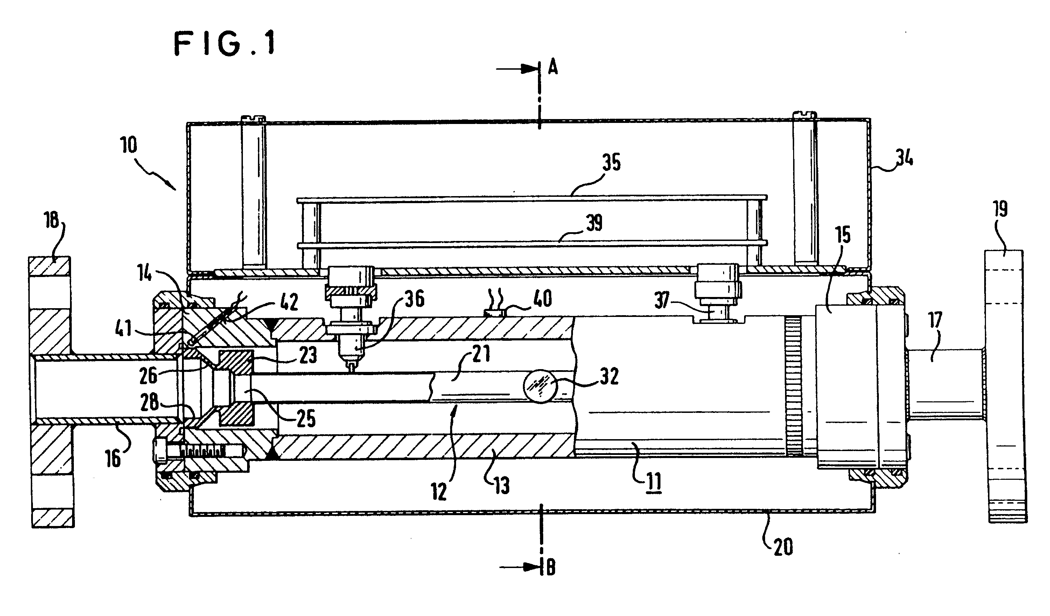

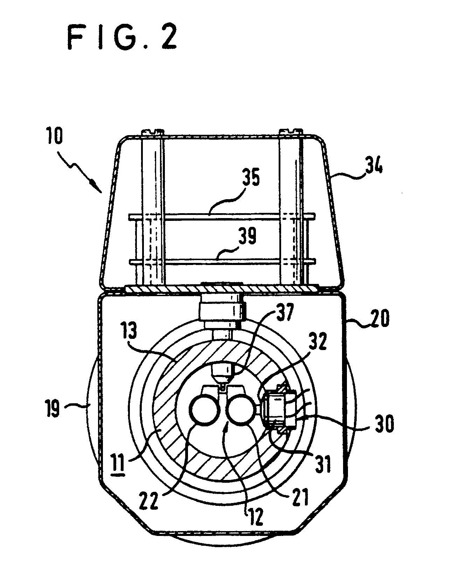

Das in Fig. 1 in einer teilweise geschnittenen Seitenansicht und in Fig. 2 im Querschnitt dargestellte Massendurchflußmeßgerät 10 weist ein massives Trägerrohr 11 auf, in dessen Innerem ein mechanisches Schwingsystem 12 angeordnet ist. Das Trägerrohr 11 besteht aus einem Rohrabschnitt 13, der an jedem Ende mit einer Endbuchse 14 bzw. 15 verschweißt ist. An jeder Endbuchse ist ein Anschlußstutzen 16 bzw. 17 angeschraubt, der einen Flansch 18 bzw. 19 trägt. Mittels der Flansche 18 und 19 kann das Massendurchflußmeßgerät in eine Rohrleitung eingefügt werden, durch die das Meßmedium strömt, dessen Massendurchfluß gemessen werden soll. Das Trägerrohr 11 ist von einem Blechgehäuse 20 umgeben.

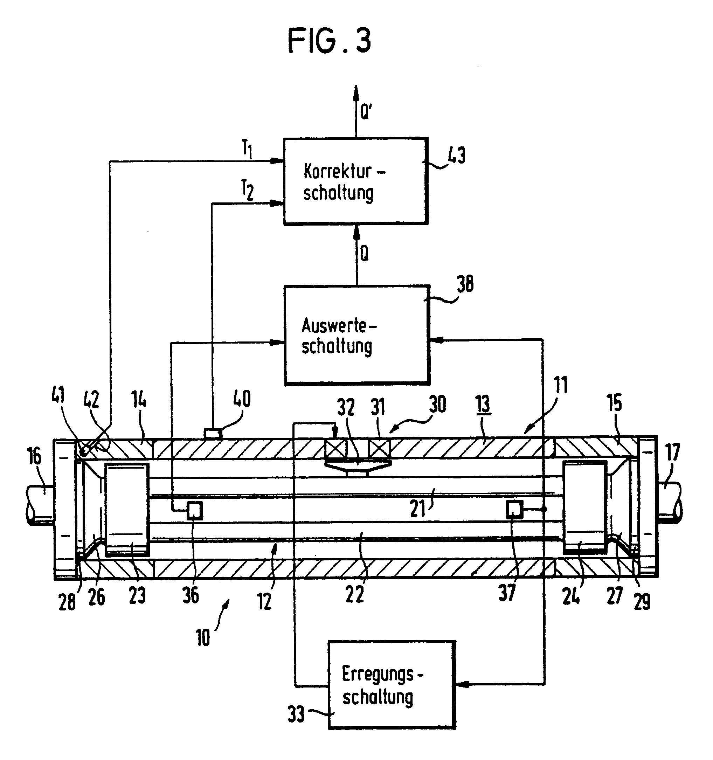

Das mechanische Schwingsystem 12 besteht aus zwei parallelen Meßrohren 21 und 22, die an beiden Enden jeweils durch ein Verteilerstück 23 bzw. 24 so miteinander verbunden sind, daß sie strömungstechnisch parallelgeschaltet sind. Die Meßrohre 21 und 22 erstrecken sich über die ganze Länge des Rohrabschnitts 13, und die Verteilerstücke liegen im Innern der Endbuchsen 14 und 15. Die beiden Verteilerstücke 23 und 24, die in Fig. 3 schematisch dargestellt sind, sind völlig gleich ausgebildet und angeordnet, doch ist in der Teilschnittansicht von Fig. 1 nur das im Innern der Endbuchse 14 liegende Verteilerstück 23 zu sehen. Die folgende Beschreibung des Verteilerstücks 23 gilt jedoch in gleicher Weise auch für das am anderen Ende des Schwingsystems angeordnete Verteilerstück 24.

Das Verteilerstück 23 enthält im Innern Strömungskanäle 25, die die durch den Anschlußstutzen 16 kommende Strömung gleichmäßig auf die beiden Meßrohre 21 und 22 aufteilen. In entsprechender Weise vereinigt das am anderen Ende angebrachte Verteilerstück 24 die Strömung der beiden Meßrohre, so daß die vereinigte Strömung durch den Anschlußstutzen 17 abfließt. Natürlich kann die Strömungsrichtung auch umgekehrt sein.

Das Verteilerstück 23 ist mit dem Innenrand einer ringförmigen, konisch geformten Membran 26 verbunden. Der Außenrand der Membran 26 ist mit einem Haltering 28 verbunden, der in der Endbuchse 14 eingespannt und axial gegen die etwas nach innen vorspringende Stirnfläche des Anschlußstutzens 16 abgestützt ist. Vorzugsweise sind die Membran 26 und der Haltering 28 in einem Stück mit dem Verteilerstück 23 gefertigt. In gleicher Weise ist an das Verteilerstück 24 (Fig. 3) eine ringförmige konische Membran 27 angeformt, die in einen Haltering 29 übergeht. Somit ist das Schwingsystem 12 mittels der Membranen 26 und 27 axial im Trägerrohr 11 aufgehängt, wobei der einzige Kontakt zwischen dem Schwingsystem 12 und dem Trägerrohr 11 über die an den beiden Enden angebrachten Membranen 26 und 27 besteht.

In der Mitte des Trägerrohres 11 ist ein Schwingungserreger 30 (Fig. 2 und 3) angeordnet, der die beiden Meßrohre 21 und 22 in gegensinnige Biegeschwingungen versetzen kann, deren Schwingungsebene in der gemeinsamen Ebene der beiden Meßrohre liegt, also senkrecht zur Zeichenebene von Fig. 1 steht. Der Schwingungserzeuger 30 besteht aus einem in der Wand des Rohrabschnitts 13 befestigten Elektromagnet 31, dem ein am Meßrohr 21 befestigter Anker 32 gegenüberliegt. Wenn durch die Spule des Elektromagnets 31 ein Wechselstrom geschickt wird, wird durch die wechselnden Anziehungskräfte zwischen dem Elektromagnet 31 und dem Anker 32 das Meßrohr 21 in Biegeschwingungen versetzt, die über die Verteilerstücke 23 und 24 auf das Meßrohr 22 übergekoppelt werden, so daß schließlich die beiden Meßrohre 21 und 22 gegenphasige Biegeschwingungen ausführen. Der Erregungswechselstrom kommt von einer elektronischen Erregungsschaltung 33, die in einem auf dem Blechgehäuse 20 befestigten Schaltungsgehäuse 34 untergebracht ist, wie in Fig. 1 und 2 durch die Schaltungsplatine 35 angedeutet ist.

Die Messung des Massendurchflusses beruht bei einem solchen Massendurchflußmeßgerät darauf, daß das durch die schwingenden Meßrohre 21 und 22 strömende Meßmedium Corioliskräfte erzeugt, die eine gegenseitige Phasenverschiebung der mechanischen Schwingungen an den beiden Enden jedes Meßrohres zur Folge haben. Die Größe dieser Phasenverschiebung ist ein Maß für den Massendurchfluß. Zur Messung der Phasenverschiebung sind zu beiden Seiten des Schwingungserregers 30 und in gleichen Abständen von diesem zwei Schwingungssensoren 36 und 37 angebracht. Die Schwingungssensoren 36 und 37 tasten die mechanischen Schwingungen der Meßrohre 21 und 22 ab und setzen diese in elektrische Sensorsignale um, die für die Phasenlage der abgetasteten Schwingungen kennzeichnend sind. Die Schwingungssensorsignale werden einer elektronischen Auswerteschaltung 38 (Fig. 3) zugeführt, die gleichfalls im Schaltungsgehäuse 34 untergebracht ist, wie in den Figuren 1 und 2 durch die Schaltungsplatine 39 angedeutet ist.

Das Ausgangssignal des Schwingungssensors 37 wird außerdem der Erregungsschaltung 33 (Fig. 3) zugeführt, die an ihrem Ausgang zum Elektromagnet 31 des Schwingungserregers 30 einen Wechselstrom liefert, der die gleiche Frequenz wie das Ausgangssignal des Schwingungssensors 37 und eine solche Phasenlage hat, daß die Meßrohre 21 und 22 zu Biegeschwingungen mit ihrer Eigenresonanzfrequenz angeregt werden.

Die Auswerteschaltung 38 (Fig. 3) ermittelt die Phasendifferenz zwischen den beiden Schwingungssensorsignalen und gibt an ihrem Ausgang ein Meßsignal ab, das den durch diese Phasendifferenz ausgedrückten Meßwert Q des Massendurchflusses darstellt. Dieser Meßwert Q kann aber infolge von temperaturbedingten Einflüssen auf das Schwingungsverhalten des mechanischen Schwingsystems 12 fehlerhaft sein.

Solche temperaturbedingten Einflüsse können verschiedene Ursachen haben, die allein oder in Verbindung miteinander auftreten können. Selbst wenn das Trägerrohr 11 und das Schwingsystem 12 die gleiche Temperatur haben, können temperaturabhängige mechanische Spannungen auftreten, wenn Trägerrohr und Schwingsystem aus unterschiedlichen Materialien mit unterschiedlichen Wärmeausdehnungskoeffizienten bestehen. Noch stärker wirken sich Temperatureinflüsse auf das Meßergebnis aus, wenn die Temperatur der Meßrohre von der Temperatur des Trägerrohrs verschieden ist. Dies ist insbesondere dann der Fall, wenn der Massendurchfluß eines Meßmediums gemessen werden soll, dessen Temperatur von der Umgebungstemperatur verschieden ist. Bei sehr heißen oder sehr kalten Meßmedien kann ein sehr großes Temperaturgefälle zwischen dem Trägerrohr und den Meßrohren bestehen. Schließlich sind auch dynamische Temperaturwechsel zu beachten, wenn die Temperatur des Meßmediums und/oder die Umgebungstemperatur nicht konstant sind.

Das beschriebene Massendurchflußmeßgerät ist mit zusätzlichen Einrichtungen ausgestattet, die eine Kompensation solcher temperaturbedingter Einflüsse auf das Meßergebnis ermöglichen. Zu diesen Einrichtungen gehört ein erster Temperatursensor 40, der so angebracht ist, daß er die Temperatur des Trägerrohres 11 mißt und ein diese Temperatur anzeigendes erstes elektrisches Temperatursensorsignal liefert. Der Temperatursensor 40 kann zu diesem Zweck an der Außenseite des Rohrabschnitts 13 im Abstand von den beiden Endbuchsen 14 und 15 des Trägerrohres 11 angeordnet sein.

Ein zweiter Temperatursensor 41 ist so angebracht, daß er die Temperatur des mechanischen Schwingsystems 12 mißt und ein diese Temperatur anzeigendes zweites elektrisches Temperatursensorsignal liefert. Der zweite Temperatursensor könnte zu diesem Zweck an einem Bestandteil des mechanischen Schwingsystems 12 im Innern des Trägerrohres angebracht sein, doch wäre er dann dauernd den mechanischen Schwingungen ausgesetzt, was Probleme hinsichtlich der Dauerfestigkeit ergäbe. Bei dem dargestellten Beispiel ist deshalb der zweite Temperatursensor 41 ebenfalls am Trägerrohr 11 angebracht, jedoch an einer Stelle, die sich im wesentlichen auf der Temperatur des Meßmediums befindet, die auch die Temperatur des Schwingsystems 12 ist. Zu diesem Zweck ist in der Endbuchse 14 eine Ausnehmung 42 angebracht, die sich von der Außenfläche der Endbuchse 14 schräg bis in die unmittelbare Nähe des Halterings 28 erstreckt. Der Temperatursensor 41 ist am Ende der Ausnehmung 42 möglichst nahe beim Haltering 28 angeordnet, und seine Anschlußleiter sind durch die Ausnehmung 42 nach außen geführt. Da sich der Haltering 28 auf der Temperatur des Meßmediums befindet, mißt der Temperatursensor 41 im wesentlichen die Temperatur des mechanischen Schwingsystems 12. Je nach der Form des Temperatursensors 41 kann die Ausnehmung 42 eine Schrägbohrung oder ein eingefräster Schrägschlitz sein.

Die Temperatursensoren 40 und 41 können von beliebiger an sich bekannter Art sein. Vorzugsweise werden temperaturabhängige Widerstände aus Metall oder Halbleitermaterial verwendet.

Die von den beiden Temperatursensoren 40 und 41 gelieferten Temperatursensorsignale werden einer Korrekturschaltung 43 (Fig. 3) zugeführt, die gleichfalls im Schaltungsgehäuse 34 untergebracht ist, beispielsweise zusammen mit der Auswerteschaltung 38 auf der Schaltungsplatine 39. Die Korrekturschaltung 43 empfängt außerdem das den unkorrigierten Meßwert Q des Massendurchflusses darstellende Ausgangssignal der Auswerteschaltung 38 und gibt am Ausgang ein Meßsignal ab, das den korrigierten Meßwert Q' des Massendurchflusses darstellt. Zu diesem Zweck multipliziert die Korrekturschaltung den unkorrigierten Meßwert mit einem Korrekturfaktor K, der von den beiden Temperaturen abhängt, die mittels der Temperatursensoren 40 und 41 gemessen werden:

$$Q' = K \bullet Q \qquad (1)$$

Für das beschriebene Durchflußmeßgerät mit einem an den Enden fest eingespannten Schwingsystem aus geraden Meßrohren gilt der Korrekturfaktor

$$K = K_0 + k_1 T_1 + K_2 T_2 + K_3 T_1^2 + K_4 T_2^2 + K_5 T_1 T_2 \qquad (2)$$

Darin sind:

$T_1$ :Meßrohrtemperatur  
$T_2$ :Trägerrohrtemperatur  
$k_0, k_1 ...$ :konstante Koeffizienten, die für eine bestimmte Ausführungsform des Massendurchflußmeßgeräts spezifisch sind.

In der Praxis hat es sich gezeigt, daß die Glieder höherer Ordnung vernachlässigbar sind. Eine Temperaturkompensation ausreichender Genauigkeit wird erzielt, wenn der unkorrigierte Meßwert Q mit dem Korrekturfaktor

$$K = k_0 + k_1 T_1 + k_2 T_2 \qquad (3)$$

multipliziert wird.

Die Koeffizienten $k_0$, $k_1$ und $k_2$ werden für eine bestimmte Ausführungsform des Massendurchflußmeßgeräts empirisch ermittelt. Es bietet dann für den Fachmann keine Schwierigkeit, eine Korrekturschaltung zu entwerfen, die aufgrund der beiden Temperatursensorsignale das Meßsignal so verändert, daß der unkorrigierte Meßwert Q mit dem vorstehenden Korrekturfaktor K multipliziert wird. Wenn beispielsweise das Ausgangssignal der Auswerteschaltung 38 ein Analogsignal ist, das dem Meßwert Q proportional ist, kann die Korrekturschaltung 43 einen Verstärker enthalten, dessen Verstärkungsfaktor proportional zu dem Korrekturfaktor K gesteuert wird.

In den meisten Fällen ist jedoch die Auswerteschaltung 38 ein Mikrocomputer, der so programmiert ist, daß er den Meßwert Q aus der Phasenverschiebung der Schwingungssensorsignale ermittelt. In diesem Fall erfolgt die Korrektur des Meßwerts Q vorzugsweise durch ein zusätzliches Korrekturprogramm im gleichen Mikrocomputer.

**Patentansprüche**

1. Nach dem Coriolisprinzip arbeitendes Massendurchflußmeßgerät mit einem Trägerrohr (11), einem axial im Trägerrohr angeordneten mechanischen Schwingsystem (12) mit wenigstens einem an beiden Enden eingespannten geraden Meßrohr (21, 22), einem Schwingungserreger (30), der das bzw. jedes Meßrohr in der Mitte in Biegeschwingungen versetzt, Schwingungssensoren (36, 37), welche die mechanischen Schwingungen in gleichen Abständen zu beiden Seiten des Schwingungserregers abtasten und elektrische Schwingungssensorsignale erzeugen, die für die Frequenz und Phasenlage der abgetasteten Schwingungen kennzeichnend sind, und mit einer Auswerteschaltung (38), welche die Schwingungssensorsignale empfängt und aus deren Phasendifferenz ein den Meßwert des Massendurchflusses anzeigendes Meßsignal erzeugt, dadurch gekennzeichnet, daß ein erster Temperatursensor (40) so angeordnet ist, daß er die Temperatur des Trägerrohres mißt und ein diese Temperatur anzeigendes erstes Temperatursensorsignal erzeugt, daß ein zweiter Temperatursensor (41) so angeordnet ist, daß er die Temperatur des mechanischen Schwingsystems mißt und ein diese Temperatur anzeigendes zweites Temperatursensorsignal erzeugt, und daß eine Korrekturschaltung (43) die beiden Temperatursensorsignale empfängt und dem Meßsignal aufgrund der gemessenen Temperaturen eine Korrektur zur Beseitigung des Temperatureinflusses auf das Meßergebnis erteilt.

2. Massendurchflußmeßgerät nach Anspruch 1, dadurch gekennzeichnet, daß die Korrekturschaltung (43) den Meßwert des Massendurchflusses mit einem Korrekturfaktor

$$K = k_0 + k_1 T_1 + k_2 T_2$$

multipliziert, wobei $T_1$ die Temperatur des Schwingsystems, $T_2$ die Temperatur des Trä-

gerrohres und $k_0$, $k_1$, $k_2$ konstante, für das Massendurchflußmeßgerät spezifische Koeffizienten sind.

3. Massendurchflußmeßgerät nach Anspruch 1 oder 2, dadurch gekennzeichnet, daß die Ausschalteschaltung (38) und die Korrekturschaltung (43) durch einen entsprechend programmierten Mikrocomputer gebildet sind.

## Claims

1. Mass flow meter operating by the Coriolis principle and comprising a support tube (11), a mechanical oscillating system (12) disposed axially in the support tube and comprising at least one straight measuring tube (21, 22) clamped at both ends, an oscillation exciter (30) which sets the or each measuring tube in the centre in flexural oscillations, oscillation sensors (36, 37) which sense the mechanical oscillations at equal distance on both sides of the oscillation exciter and generate electrical oscillation sensor signals which are characteristic of the frequency and phase position of the sensed oscillations, and an evaluation circuit (38) which receives the oscillation sensor signals and from the phase difference thereof generates a measuring signal indicating the measured value of the mass flow, characterized in that a first temperature sensor (40) is so arranged that it measures the temperature of the support tube and generates a first temperature sensor signal indicating said temperature, that a second temperature sensor (41) is so arranged that it measures the temperature of the mechanical oscillating system and generates a second temperature sensor signal indicating said temperature, and that a correction circuit (43) receives the two temperature sensor signals and imparts to the measuring signal on the basis of the measured temperatures a correction for eliminating the temperature influence on the measurement result.

2. Mass flow meter according to claim 1, characterized in that the correction circuit (43) multiplies the measured value of the mass flow by a correction factor

$$K = k_0 + k_1 T_1 + k_2 T,$$

wherein $T_1$ is the temperature of the oscillating system, $T_2$ the temperature of the support tube and $k_0$, $k_1$, $k_2$ are constant coefficients specific to the mass flow meter.

3. Mass flow meter according to claim 1 or 2, characterized in that the evaluation circuit (38) and the correction circuit (43) are formed by a correspondingly programmed microcomputer.

## Revendications

1. Débimètre massique fonctionnant suivant le principe de Coriolis comprenant un tube porteur (11), un système oscillant mécanique (12) disposé axialement dans le tube porteur et comprenant au moins un tube de mesure rectiligne (21, 22) fixé aux deux extrémités, un excitateur vibratoire (30) qui produit des vibrations de flexion au milieu du ou de chaque tube de mesure, des détecteurs de vibration (36, 17), qui détectent ces vibrations mécaniques à égale distance des deux côtés de l'excitateur vibratoire et produisent des signaux électriques de détection de vibration, qui sont caractéristiques de la fréquence et du déphasage de la vibration détectée, et comprenant un circuit d'exploitation (38) qui reçoit lesdits signaux de détection de vibration et à partir de leur différence de phase élabore un signal de mesure indicatif de la valeur mesurée du débit massique, caractérisé en ce qu'un premier capteur de température (40) est disposé de façon à mesurer la température du tube porteur et à délivrer un premier signal de mesure de température, indicatif de cette température, en ce qu'un deuxième capteur de température (41) est disposé de façon à mesurer la température du système oscillant mécanique et à délivrer un deuxième signal de mesure de température, indicatif de cette température, et en ce qu'un circuit correcteur (43) reçoit ces deux signaux de mesure de température et opère en fonction des températures mesurées une correction sur ledit signal de mesure pour éliminer l'influence de la température sur le résultat de mesure.

2. Débimètre massique conforme à la revendication 1, caractérisé en ce que le circuit correcteur (43) multiplie la valeur mesurée du débit massique par un facteur de correction

$$K = k0 + k1\ T1 = k2\ T2$$

où $T1$ est la température du système oscillant, $T2$ la température du tube porteur et $k0$, $k1$, $k2$ sont des coefficients constants spécifiques du débitmètre massique.

3. Débimètre massique conforme à l'une des revendications 1 ou 2, caractérisé en ce que le circuit d'exploitation (38) et le circuit correcteur (43) sont réalisés au moyen d'un microcalculateur programmé de manière correspondante.

# FIG.1

EP 0 261 435 B1

# F I G. 2

# FIG.3

$Q'$

$T_1$

Korrekturschaltung

43

$T_2$

$Q$

Auswerteschaltung

38

41 42 14 40 32 31 30 13 11 15

16 17

21

28 26 23 36 12 22 37 24 27 29

10

Erregungsschaltung

33